# EUROPÄISCHE PATENTSCHRIFT

(11) **EP 1 498 310 B1**
(45) Veröffentlichungstag und Bekanntmachung des Hinweises auf die Patenterteilung: **21.03.2012**
(21) Anmeldenummer: 04012318.4
(22) Anmeldetag: 25.05.2004
(51) Int. Cl.: B60Q 1/14

(54) **Steuereinreichung, zur automatischen Steuerung von Beleuchtungseinrichtungen**
Control device for the automatic control of illumination devices
Dispositif de commande pour pilotage automatique des dispositifs d'éclairage

(30) Priorität: 16.07.2003 DE 10332300
(43) Veröffentlichungstag der Anmeldung: 19.01.2005
(73) Patentinhaber: ROBERT BOSCH GMBH, 70442 Stuttgart (DE)
(72) Erfinder: Schmitt, Patrick, 77839 Lichtenau (DE)

(56) Entgegenhaltungen:
- US-A- 5 329 206
- US-A- 5 442 527
- US-A- 5 592 146

## Beschreibung

### Stand der Technik

Die Auffindung betrifft eine Steuereinrichtung, zur automatischen Steuerung von Beleuchtungseinrichtungen nach dem Oberbegriff des unabhängigen Anspruchs.

Es sind schon zahlreiche Steuereinrichtungen, zur automatischen Steuerung von Beleuchtungseinrichtungen, beispielsweise aus der DE-A-199 37 119 bekannt, die Sensoren und ein Steuergerät mit veränderbarer Steuercharakteristik aufweisen. Derartige Steuereinrichtungen dedektieren Witterungsbedingungen und steuern die Scheinwerfer eines Kraftfahrzeugs in Abhängigkeit der von den Sensoren abgegebenen Signale.

Die Steuercharakteristik des Steuergeräts ist hierbei vom Hersteller programmiert und fest vorgegeben.

Aus der US-5,329,206 ist eine Steuereinrichtung zur Steuerung der Beleuchtungseinrichtungen eines Kraftfahrzeugs bekannt, bei dem die Steuercharakteristik, methin die Schaltschwellen, durch ein Potentiometer vom Fahrer verändert werden können.

### Vorteile der Erfindung

Die erfindungsgemäße Steuereinrichtung mit den Merkmalen des Hauptanspruches hat den Vorteil, dass die Steuercharakteristik durch ein fahrerbetätigbares Schaltmittel veränderbar ist. Dies ist insbesondere deshalb vorteilhaft, da hierdurch das Steuerverhalten des Steuergeräts wesentlich verbessert, da eine optimale Abstimmung auf den Fahrer erfolgen kann.

Durch die in den Unteransprüchen aufgeführten Maßnahmen ergeben sich vorteilhafte Weiterbildungen und Verbesserungen dem Hauptanspruch angegebenen Merkmale.

In einer einfachen Ausführung der Erfindung, die Steuercharakteristik Schaltschwellen auf, die durch die Schaltmittel veränderbar sind.

Besonders vorteilhaft ist es, wenn die Steuercharakteristik zumindest nach einer Betätigung des Schaltmittels einer Plausibilitätskontrolle unterzogen ist. Auf diese Weise ist gewährleistet, das auch bei unsinnigen Betätigungen des Schaltmittels eine passable Steuercharakteristik vorliegt.

Weiterhin ist es vorteilhaft, wenn im Steuergerät mehrere Steuercharakteristiken ablegbar sind die durch den Fahrer ausgewählt werden können. Auf diese Weise kann sich jeder Benutzer eines Kraftfahrzeugs seine individuelle Steuercharakteristik im Steuergerät ablegen und bei Bedarf abrufen. Insbesondere dann, wenn ein Kraftfahrzeug von mehreren Fahrern benutzt wird, wird dies als besonders vorteilhaft angesehen.

Ist der Sensor als Helligkeitssensor ausgebildet, so könnnen vorteilhafterweise fahrer- und helligkeitsabhängig die Beleuchtungseinrichtungen ein- bzw. ausgeschaltet werden.

Ist ein Regensensor vorgesehen, der Signale abzugeben vermag, die die Steuercharakteristik des Steuergeräts beeinflussen, so können auch Witterungsbedingungen in der Steuercharakteristik berücksichtigt werden.

Ebenso vorteilhaft ist es, wenn Geschwindigkeitsignale in die Steuercharakteristik eingeschlossen werden.

In einer einfachen und kostengünstigen Ausbildung ist das Schaltmittel als Taster ausgebildet.

Besonders vorteilhaft ist es, wenn das Schaltmittel am Lenkstockschalter des Kraftfahrzeugs angeordnet ist. Hier ist das Schaltmittel während der Fahrt leicht zugänglich, so dass der Fahrer die Hände am Steuerrad belassen kann.

### Zeichnung

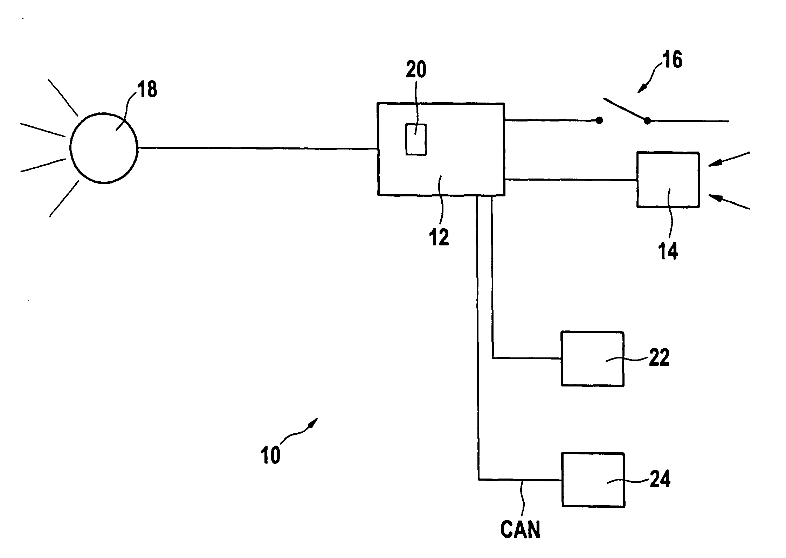

Ein Ausführungsbeispiel der Erfindung ist in der einzigen Figur dargestellt und in der nachfolgenden Beschreibungen näher erläutert. Die Figur zeigt eine schematische Darstellung einer Steuereinrichtung mit Steuergerät, Sensor und Schaltmittel und einer Beleuchtungseinrichtung.

### Beschreibungen des Ausführungsbeispiels

Die Figur zeigt eine erfindungsgemäße Steuereinrichtung 10 in einer schematischen Darstellung. Diese umfasst im wesentlichen ein Steuergerät 12, dass mit einem Sensor 14, 22, 24 und einem Lenkstockschalter mit einem Taster als Schaltmittel 16 verbunden ist. Das Steuergerät 12 ist darüber hinaus mit den Fahrzeugscheinwerfern und Heckleuchten als Beleuchtungseinrichtungen 18 verbunden und der Art ausgebildet, dass es diese zur steuern vermag. Hierzu dient eine Steuercharakteristik, die in einem EEPROM als Speichermittel 20 des Steuergeräts 12 abgelegt ist.

Der Sensor 14 misst die Umgebungshelligkeit im Bereich des Kraftfahrzeugs. Typischerweise wird die Umgebungshelligkeit in verschiedenen Richtungen des Kraftfahrzeugs dedektiert. Es können aber auch andere und/oder weitere Sensoren, beispielsweise ein Regensensor 22 oder ein Geschwindigkeitssensor 24 vorgesehen sein.

Der Regensensor 22 vermittelt Signale RS, der Geschwindigkeitssensor 24 Signale GS an das Steuergerät 12. Üblicher Weise beinhaltet das Kraftfahrzeug bereits einen Geschwindigkeitssensor 24 für das Tachometer, der seine Signale GS über einen CAN- oder LIN-Bus mehreren Komponenten im Kraftfahrzeug zur Verfügung stellt.

Ist der Sensor 14 als Helligkeitssensor ausgebildet, so werden dessen Signale S und gegebenenfalls die Signale RS und GS an das Steuergerät 12 vermittelt. Damit ist das Steuergerät 12 zumindest über die Helligkeitsverhältnisse im Bereich des Kraftfahrzeugs informiert und kennt gegebenenfalls auch die Witterungsbedingungen anhand des Signals RS und die Fahrzeuggeschwindigkeit durch das Signal GS. Sinkt nun die Helligkeit, die vom Sensor 14 an das Steuergerät 12 vermittelt wird, unter eine Einschaltschwelle SE als Schaltschwelle, so werden die Beleuchtungseinrichtungen 18 vom Steuergerät 12 eingeschaltet. Die Einschaltschwelle SE kann eine feste Schwelle sein, die vom Fahrzeughersteller in der Steuergerät 12 implementiert ist, oder aber eine variable Schwelle sein, die durch die Witterungsbedingungen also das Signal RS und/oder das Geschwindigkeitsignal GS beeinflusst ist.

Erfindungsgemäß kann der Fahrer des Kraftfahrzeugs durch das als Taster ausgebildete Schaltmittel 16 am Lenkstockschalter die Beleuchtungseinrichtungen 18 einschalten, wenn er die Helligkeitsverhältnisse für zu dunkel einschätzt. Das Steuergerät 12 erkennt dies und setzt die Einschaltschwelle SE auf dieses Niveau. In gleicher Weise wird bei ansteigender Helligkeit verfahren. Übersteigt die Helligkeit ein bestimmtes Niveau, dass durch eine Ausschaltschwelle SA als weitere Schaltschwelle charakterisiert ist, so werden die Beleuchtungseinrichtungen 18 ausgeschaltet. Betätigt der Fahrer das Schaltmittel 16 während die Beleuchtungseinrichtungen 18 noch eingeschaltet sind, um dieselben selbst auszuschalten, so wird dieses Niveau als neue Ausschaltschwelle SA definiert. Damit erfolgt eine individuelle Anpassung an den Fahrer des Kraftfahrzeugs.

Zusätzlich wird nach einer Betätigung des Schaltmittels 16 eine Plausibilitätskontrolle durchgeführt. Hierbei wird überprüft, ob die Einschaltschwelle SE niedriger oder gleich der Ausschaltschwelle SA ist. Alternativ oder ergänzend können auch weitere Überprüfungen vorgenommen werden, beispielsweise ob das Verhältnis zwischen der Einschaltschwelle SE und der Ausschaltschwelle SA in einem angemessenen Verhältnis steht. Typischerweise soll eine Hysterese zwischen der Einschaltschwelle SE und Ausschaltschwelle SA gegeben sein, so dass die Einschaltschwelle SE bei niedrigerer Helligkeit liegt als die Ausschaltschwelle SA. Verläuft die Plausibilitätskontrolle Negativ, das heißt, wird die Einschaltschwelle SE auf einen Wert gesetzt, der in keinem angemessenen Verhältnis zu Ausschaltschwelle SA steht, so wird der Schaltbefehl des Schaltmittels 16 nicht akzeptiert. Alternativ kann natürlich auch vorgesehen sein, die Beleuchtungseinrichtungen 18 zwar ein- beziehungsweise auszuschalten, jedoch die Einschaltschwelle SE beziehungsweise die Ausschaltschwelle SA auf ihren Niveaux zu belassen.

Die gleiche Vorgehensweise kann natürlich auch für die Signale RS des Regensensors 22 gewählt werden, der zusätzlich auch eine Scheibenwischvorrichtung zur steuern vermag.

Mutatis mutandis gilt dies auch für die Signale GS des Geschwindigkeitssensors 24. Auch hier können Schaltschwellen SE, SA vorgesehen sein, die durch den Fahrer angepasst werden können und die Beleuchtungseinrichtungen 18 bei über- oder unterschreiten einer vorbestimmten Geschwindigkeit, gegebenenfalls auch in Kombination mit den übrigen Signalen, ein- bzw. ausschalten. Auch hierbei ist eine Hysterese vorgesehen, um ein Blinken der Beleuchtungseinrichtungen 18 zu verhindern. Hierbei werden die Beleuchtungseinrichtungen 18 beispielsweise bei überschreiten einer Geschwindigkeit von 160 km/h eingeschaltet und erst bei unterschreiten von 140 km/h wieder ausgeschaltet. Eine Änderung dieser Schaltschwellen SE und SA wird von der Plausibilitätskontrolle überwacht.

Insbesondere ist hier auch ein Zeitfenster vorgesehen, innerhalb dessen die Geschwindigkeit über-beziehungsweise unterschritten sein muß, bevor die Beleuchtungseinrichtungen 18 einbeziehungsweise ausgeschaltet werden.

Da die Kraftfahrzeuge häufig von mehreren Benutzern genutzt werden, können in der Speichereinrichtung 12 mehrere Benutzerprofile mit ihren jeweiligen Schaltschwellen SA, SE abgelegt sein. Der Fahrer wählt dann zu Beginn der Fahrt sein eigenes Profil aus. Ergänzend oder alternativ kann dieses Profil auch mit anderen Größen, wie beispielsweise der Sitzposition des Fahrersitzes, der Spiegeleinstellungen der Fahrzeugspiegelt oder anderen individuellen Fahrermerkmalen kombiniert werden.

## Patentansprüche

1. Steuereinrichtung (10), zur automatischen Steuerung von Beleuchtungseinrichtungen (18), eines Kraftfahrzeugs, mindestens einem Sensor (14, 22, 24), der Signale (S, GS, RS) abzugeben vermag, und mit mindestens einem Steuergerät (12), das eine veränderbarer Steuercharakteristik aufweist, wobei die Steuercharakteristik durch ein fahrerbetätigbares Schaltmittel (16) veränderbar ist und der Sensor (14) als Helligkeitssensor ausgebildet ist und die Steuercharakteristik durch die Helligkeitssignale (S) beeinflußt wird, **dadurch gekennzeichnet, daß** ein weiterer Sensor (22) als Regensensor ausgebildet ist und die Steuercharakteristik durch die Signale (RS) dieses beeinflußt wird.

2. Steuereinrichtung (10) nach Anspruch 1, **dadurch gekennzeichnet, dass** die Steuercharakteristik Schaltschwellen (SA, SE) aufweist, die durch das Schaltmittel (16) veränderbar sind.

3. Steuereinrichtung (10) nach einem der vorhergehenden Ansprüche, **dadurch gekennzeichnet, dass** das Steuergerät (12) mit dem Schaltmittel (16) verbunden ist und die Steuercharakteristik zumindest nach einer Betätigung des Schaltmittels (16) einer Plausibilitätskontrolle unterzogen ist.

4. Steuereinrichtung (10) nach einem der vorhergehenden Ansprüche, **dadurch gekennzeichnet, dass** mehrere Steuercharakteristiken im Steuergerät (12) ablegbar sind und fahrerauswählbar sind.

5. Steuereinrichtung (10) nach einem der vorhergehenden Ansprüche, **dadurch gekennzeichnet, dass** der Sensor (24) als Geschwindigkeitssensor ausgebildet ist und Geschwindigkeitssignale (GS) in Abhängigkeit der Fahrzeuggeschwindigkeit abzugeben vermag und die Steuercharakteristik durch die Geschwindigkeitssignale (GS) beeinflußbar ist.

6. Steuereinrichtung (10) nach einem der vorhergehenden Ansprüche, **dadurch gekennzeichnet, dass** das Schaltmittel (16) als Taster ausgebildet ist.

7. Steuereinrichtung (10) nach einem der vorhergehenden Ansprüche, **dadurch gekennzeichnet, dass** das Schaltmittel (16) am Lenkstockschalter angeordnet ist.

## Claims

1. Control device (10) for the automatic control of illumination devices (18) of a motor vehicle, having at least one sensor (14, 22, 24) which is capable of outputting signals (S, GS, RS), and having at least one control unit (12) which has a variable control characteristic, wherein the control characteristic can be changed by a switching means (16) which can be activated by the driver, and the sensor (14) is embodied as a brightness sensor, and the control characteristic is influenced by the brightness signals (S), **characterized in that** a further sensor (22) is embodied as a rain sensor, and the control characteristic is influenced by the signals (RS) thereof.

2. Control device (10) according to Claim 1, **characterized in that** the control characteristic has switching thresholds (SA, SE) which can be varied by the switching means (16).

3. Control device (10) according to one of the preceding claims, **characterized in that** the control unit (12) is connected to the switching means (16), and the control characteristic is subjected to a plausibility check at least after activation of the switching means (16).

4. Control device (10) according to one of the preceding claims, **characterized in that** a plurality of control characteristics can be stored in the control unit (12) and can be selected by the driver.

5. Control device (10) according to one of the preceding claims, **characterized in that** the sensor (24) is embodied as a speed sensor and is capable of outputting speed signals (GS) as a function of the vehicle speed, and the control characteristic can be influenced by the speed signals (GS).

6. Control device (10) according to one of the preceding claims, **characterized in that** the switching means (16) is embodied as a pushbutton key.

7. Control device (10) according to one of the preceding claims, **characterized in that** the switching means (16) is arranged on the steering column switch.

## Revendications

1. Dispositif de commande (10) pour la commande automatique de dispositifs d'éclairage (18) d'un véhicule automobile, comprenant au moins un capteur (14, 22, 24) qui est en mesure de délivrer des signaux (S, GS, RS) et comprenant au moins un contrôleur (12) qui présente une caractéristique de commande modifiable, la caractéristique de commande étant modifiable par des moyens de commutation (16) pouvant être actionnés par le conducteur et le capteur (14) étant réalisé sous la forme d'un détecteur de luminosité et la caractéristique de commande étant influencée par les signaux de luminosité (S), **caractérisé en ce qu'**un capteur supplémentaire (22) est réalisé sous la forme d'un détecteur de pluie et la caractéristique de commande est influencée par les signaux (RS) de celui-ci.

2. Dispositif de commande (10) selon la revendication 1, **caractérisé en ce que** la caractéristique de commande présente des seuils de commutation (SA, SE) qui peuvent être modifiés par les moyens de commutation (16).

3. Dispositif de commande (10) selon l'une des revendications précédentes, **caractérisé en ce que** le contrôleur (12) est relié avec les moyens de commutation (16) et la caractéristique de commande est soumise à un contrôle de plausibilité au moins après un actionnement des moyens de commutation (16).

4. Dispositif de commande (10) selon l'une des revendications précédentes, **caractérisé en ce que** plusieurs caractéristiques de commande peuvent être stockées dans le contrôleur (12) et peuvent être sélectionnées par le conducteur.

5. Dispositif de commande (10) selon l'une des revendications précédentes, **caractérisé en ce que** le capteur (24) est réalisé sous la forme d'un capteur de vitesse et il est en mesure de délivrer des signaux de vitesse (GS) en fonction de la vitesse du véhicule et la caractéristique de commande peut être influencée par les signaux de vitesse (GS).

6. Dispositif de commande (10) selon l'une des revendications précédentes, **caractérisé en ce que** les moyens de commutation (16) sont réalisés sous la forme d'une touche.

7. Dispositif de commande (10) selon l'une des revendications précédentes, **caractérisé en ce que** les moyens de commutation (16) sont disposés sur un commutateur de la colonne de direction.
